# EUROPÄISCHE PATENTSCHRIFT

(11) **EP 0 424 653 B1**
(45) Veröffentlichungstag und Bekanntmachung des Hinweises auf die Patenterteilung: **01.06.1994**
(21) Anmeldenummer: 90117568.7
(22) Anmeldetag: 12.09.1990
(51) Int. Cl.: G11B 27/00, G11B 27/11, G11B 27/28, G11B 27/34

(54) **Videorecorder mit einer Einrichtung zur Abspeicherung des Inhaltsverzeichnisses eines aus einer Vielzahl von Magnetbandkassetten bestehenden Kassettenmagazins**
Videorecorder comprising a device for storing the table of contents of a cassettemagazine containing a plurality of magnetic tape cassettes
Magnétoscope avec un dispositif pour enregistrer la table de matières d'un magasin de cassettes pour plusieurs cassettes à bandes magnétiques

(30) Priorität: 24.10.1989 DE 3935294
(43) Veröffentlichungstag der Anmeldung: 02.05.1991
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Welz, Gerhard, Grundig E.M.V., Kurgartenstrasse 37, D-8510 Fürth/Bay (DE); Mahmud, Shabaz, Grundig E.M.V., Kurgartenstrasse 37, D-8510 Fürth/Bay (DE)

(56) Entgegenhaltungen:
- EP-A- 0 029 946
- EP-A- 0 257 534
- EP-A- 0 291 934
- EP-A- 0 320 708
- EP-A- 0 363 653
- WO-A-80/02093
- WO-A-86/01326
- BE-A- 886 928
- DE-A- 3 608 216
- GB-A- 2 208 142
- US-A- 4 703 311
- PATENT ABSTRACTS OF JAPAN vol. 7, no. 194 (E-195)(1339) 24 August 1983,& JP-A-58 094287 (HITACHI SEISAKUSHO K.K.) 04 Juni 1983,
- JP-A-01 251380 *TOSHIBA CORP.* 06-10-1989, & PATENT ABSTRACTS OF JAPAN, Vol.13,no. 590 *P-984* *3938* 26.12.89
- JP-A-01 213853 *TOSHIBA CORP* 28.08.89, PATENT ABSTRACTS OF JAPAN, vol. 13, no. 524, P-964, 3872, 22.11.89

## Beschreibung

Die Erfindung betrifft einen Videorecorder mit einer Einrichtung zur Abspeicherung des Inhaltsverzeichnisses eines aus einer Vielzahl von Magnetbandkassetten bestehenden Kassettenmagazins mit den im Oberbegriff des Anspruchs 1 angegebenen Merkmalen.

Eine derartiger Videorecorder ist aus der EP-A2 0 257 534 der Anmelderin bekannt. Der bekannte Videorecorder enthält insbesondere einen Speicher, in dem für eine Vielzahl von numerierten Magnetbandkassetten ein Inhaltsverzeichnis in Form von Informationen über die örtliche Lage der aufgezeichneten Programmbeiträge auf dem jeweiligen Band und deren Titel abgespeichert ist. Will nun der Benutzer einen bestimmten Programmbeitrag sehen, so legt er die Magnetbandkassette, auf der der gewünschte Programmbeitrag aufgezeichnet ist, in den Videorecorder ein. Dieser führt einen automatischen Initialisierungslauf durch. Bei diesem Initialisierungslauf aktiviert der Mikrocomputer den Bandantriebsmotor zum kurzzeitigen Vor- und Zurückspulen des Bandes mit erhöhter Geschwindigkeit.

Während dieses Umspulvorganges werden von den Wellen der beiden Bandwickel oder von der Welle eines Bandwickels und der Capstan-Welle Impulse abgeleitet, deren Anzahl pro Zeiteinheit von der Drehgeschwindigkeit der Zugehörigen Welle abhängt, und dem Mikrocomputer zugeführt. Dieser errechnet unter Verwendung der genannten Impulse und unter Verwendung von im Videorecorder abgespeicherten Bandkonstanten die momentane Bandposition und legt den ermittelten Wert in einem Arbeitsspeicher ab. Der Benutzer ruft mittels der Bedientastatur das der eingelegten Magnetbandkassette zugehörige Inhaltsverzeichnis auf. Dieses wird auf dem Bildschirm eines an den Videorecorder angeschlossenen Fernsehempfängers in Tabellenform angezeigt. Der Benutzer wählt mittels der Bedientastatur den gewünschten Programmbeitrag an und betätigt eine übernahmetaste. Der Mikrocomputer ruft aus dem Speicher den Bandstand des ausgewählten Programmbeitrages (bzw. die Informationen über die örtliche Lage des ausgewählten Programmbeitrages auf dem Band) ab, vergleicht ihn mit dem momentanen Bandstand und steuert einen schnellen Umspulbetrieb zum Auffinden des gewünschten Programmbeitrages auf dem Band.

Ein Nachteil des bekannten Videorecorders besteht darin, daß der Benutzer zum Heraussuchen der Magnetbandkassette, auf der der gewünschte Programmbeitrag aufgezeichnet ist, ein manuell erstelltes oder ausgedrucktes Verzeichnis darüber benötigt, welcher Programmbeitrag auf welcher Kassette des Kassettenmagazins aufgezeichnet ist.

Aus der Offenlegungsschrift DE 36 08 216 A1 ist ein Archivierungsgerät mit einem Videorecorder bekannt. Mit diesem Gerät kann Bild- und Schriftgut mittels des Videorecorders aufgezeichnet werden. Gleichzeitig werden Belegnummer, Lageort und Kassettennummer mittels eines zusätzlichen Steuerrechners erfaßt und abgespeichert. Durch Eingabe der Belegnummern kann die betreffende Kassette aufgefunden werden und eine Anzeige des Belegs kann erfolgen.

Die Offenlegungsschrift GB 2 208 142 A beschreibt einen Videorecorder mit einem zusätzlichen Steuerrechner, bei dem Aufzeichnungen und Wiedergaben in einer bestimmten, vorprogrammierten Reihenfolge durchgeführt werden können. Bei Aufzeichnungsfehlern wie unvollständiger oder nicht vorgenommener Aufzeichnung werden die entsprechenden Programmbeiträge gekennzeichnet.

Die Offenlegungsschrift WO 86/01326 A1 beschreibt ein Wiedergabesystem, das neben Wiedergabegeräten einen zusätzlichen Steuerrechner aufweist. Mittels Informationen, wie z.B. Titel und Kategorie, die bei einem Initialisierungslauf von den vorgefertigten Datenträgern in den Steuerrechner übernommen werden müssen, ist das Auffinden bestimmter Programmbeiträge möglich.

Die bekannten Videorekorder bzw. das Wiedergabesystem weisen neben einem hohen Aufwand den Nachteil auf, daß das Aufsuchen eines Programmbeitrags bei einer Vielzahl von Magnetbandkassetten schwierig ist, wenn die genaue Bezeichnung des Programmbeitrags nicht bekannt ist, bzw., daß keine Information über die Anfertigung eigener Magnetbandkassetten entnommen werden kann.

Ausgehend von diesem Stand der Technik liegt der Erfindung die Aufgabe zugrunde, einen Videorekorder mit den im Oberbegriff des Anspruchs 1 angegebenen Merkmalen derart weiterzubilden, daß der vorstehend genannte Nachteil nicht mehr auftritt.

Diese Aufgabe wird bei einem Videorecorder mit den im Oberbegriff des Anspruchs 1 angegebenen Merkmalen durch die im kennzeichnenden Teil des Anspruchs 1 angegebenen Merkmale gelöst. Vorteilhafte Weiterbildungen der Erfindung ergeben sich aus den Unteransprüchen.

Die Vorteile der Erfindung bestehen insbesondere darin, daß der Benutzer durch Vorgabe eines einen gewünschten Programmbeitrag beschreibenden Kennsignals bzw. Kriteriums die Vielzahl der auf den Kassetten des Kassettenmagazins aufgezeichneten Programmbeiträge wirkungsvoll auf diejenigen Programmbeiträge reduzieren kann, die das gewünschte Kennsignal bzw. Kriterium aufweisen. Durch die Auflistung sämtlicher aufgezeichneter Programmbeiträge mit dem gewünschten Kennsignal auf dem Bildschirm eines an den Videorecorder angeschlossenen Fernsehempfängers erhält der Benutzer in kürzester Zeit die gewünschte Information darüber, auf welcher Kassette der gewünschte Programmbeitrag aufgezeichnet ist.

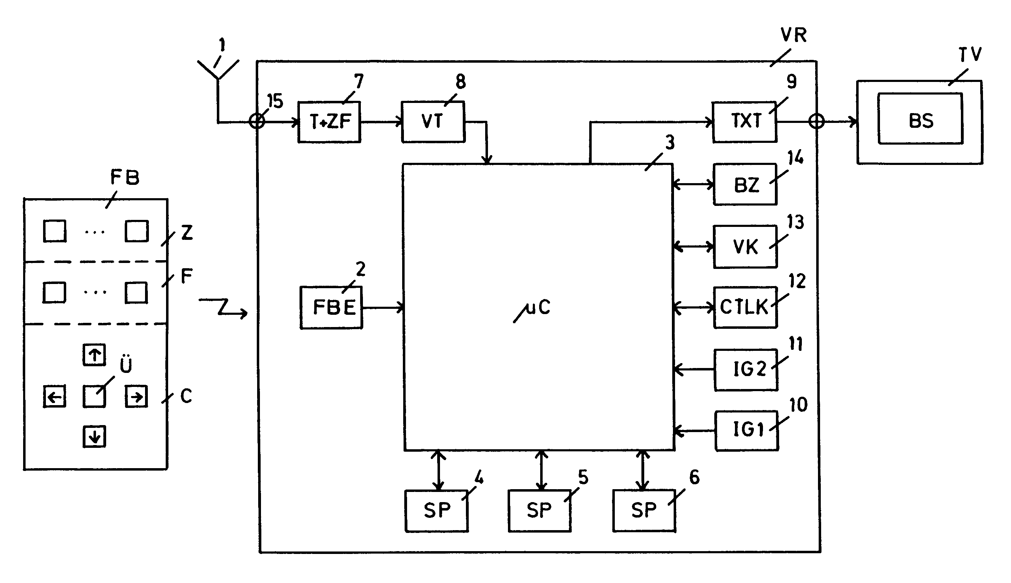

Weitere Vorteile der Erfindung ergeben sich aus der Erläuterung eines Ausführungsbeispiels anhand der Figur.

Die Figur zeigt einen an eine Antenne 1 oder eine Kabelübertragungsstrecke angeschlossenen Videorecorder VR mit einem Fernbedienungsgeber FB und einen an den Videorecorder angeschlossenen Fernsehempfänger TV mit einem Bildschirm BS.

Der Fernbedienungsgeber FB enthält einen Tastenblock Z zur Eingabe von alphanumerischen Zeichen, einen Tastenblock F mit Funktionstasten und einen Tastenblock C mit Tasten zur Cursorsteuerung und einer Übernahmetaste Ü.

Der Videorecorder VR enthält einen Fernbedienungsempfänger 2, einen Mikrocomputer 3, einen Programmierspeicher 4, einen Archivspeicher 5, einen Arbeitsspeicher 6, einen Tuner und ZF-Verstärker 7, einen Fernsehtextdecoder 8, einen Textbaustein 9, einen ersten Impulsgeber 10, einen zweiten Impulsgeber 11, einen Steuerspurmagnetkopf 12, Videoaufzeichnungs- und -wiedergabeköpfe 13 und einen Bandzähler 14.

Im folgenden Wird die Funktionßweise der gezeigten Einrichtung beispielhaft erläutert.

Die Aufzeichnung eines Programmbeitrages auf eine erste Videokassette geschieht wie folgt:

Vor dem erstmaligen Einlegen der Kassette versieht der Benutzer die Kassette - beispielsweise mittels eines Aufklebers - mit einer laufenden Nummer. Beim erstmaligen Einlegen der Kassette übermittelt der Benutzer dem Mikrocomputer 3 des Videorecorders die Nummer der eingelegten Kassette unter Verwendung des alphanumerischen Tastenblocks Z des Fernbedienungsgebers FB. Unmittelbar nach dem Einlegen der Kassette in den Videorecorder aktiviert der Mikrocomputer 3 den (nicht gezeichneten) Bandantriebsmotor zur Durchführung eines Initialisierungslaufes. Bei diesem Initialisierungslauf wird das Band kurzzeitig mit erhöhter Geschwindigkeit zurück- und vorgespult. Während dieses Umspulvorganges werden von den Wellen der beiden Bandwickel oder von der Welle eines Bandwickels und der Capstan-Welle mittels der Impulsgeber 10 und 11 Impulse abgeleitet, deren Anzahl Pro Zeiteinheit von der Drehgeschwindigkeit der zugehörigen Welle abhängt, und dem Mikrocomputer 3 zugeführt. Dieser errechnet unter Verwendung der genannten Impulse und unter Verwendung von im Videorecorder abgespeicherten Bandkonstanten die momentane Bandposition und legt den ermittelten Wert in einem Arbeitsspeicher 6 ab.

Anschließend folgt die Zwischenspeicherung des Titels der aufzuzeichnenden Sendung. Die Eingabe des Titels kann auf zwei Wegen geschehen. Ein erster Weg ist die manuelle Eingabe des Titels unter Verwendung des alphanumerischen Tastenblocks Z des Fernbedienungsgebers FB. Die zweite Möglichkeit der Titeleingabe besteht darin, den Videorecorder nach dem sog. VPT-Verfahren (Videorecorderprogrammierung über Teletext) zu programmieren und dabei den Titel der aufzuzeichnenden Sendung aus dem Fernsehtextsignal abzutrennen. Hierzu wird das empfangene Signal über den Eingang 15 des Videorecorders VR und einen Tuner und eine ZF-Stufe 7 einem Fernsehtextdecoder 8 zugeführt, an dessen Ausgang neben den für die automatische Aufzeichnung notwendigen Sendungsdaten auch der Titel zur Verfügung gestellt wird. Der auf einem der vorgenannten Wege eingegebene Titel wird ebenfalls im Arbeitsspeicher 6 zwischengespeichert.

Nach einem wesentlichen Merkmal der Erfindung erfragt der Mikrocomputer 3 - beispielsweise im Rahmen des Programmierdialoges - vom Benutzer, welcher Kategorie der aufzuzeichnende Programmbeitrag angehört. Mögliche Kategorien sind beispielsweise Nachrichten, Politik, Sport, Western, Kriminalfilm, Heimatfilm, Musik, Kindersendung, usw.. Der Benutzer gibt mittels des alphanumerischen Tastenblocks der Fernbedienung FB ein Kennsignal für die Kategorie des aufzuzeichnenden Programmbeitrages ein, welches beispielsweise aus einem einzigen Buchstaben bestehen kann. Dieses Kennsignal wird zusammen mit dem momentanen Bandstand und dem Titel im Arbeitsspeicher 6 zwischengespeichert.

Am Beginn der aufzuzeichnenden Sendung wird der Aufzeichnungsvorgang gestartet. Bei diesem Aufzeichnungsvorgang werden auf grundsätzlich bekannte Weise mittels der Videoköpfe 13 die Videosignale in den Schrägspuren des Videomagnetbandes aufgezeichnet. Während des Aufzeichnungsvorganges liefert der Bandzähler 14 ständig Informationen über den aktuellen Bandstand an den Mikrocomputer 3. Damit steht auch bei der Beendigung des Aufzeichnungsvorganges der Bandstand zur Verfügung. Dieser wird zusammen mit dem Bandstand des Anfangs der Sendung bzw. Aufzeichnung, dem Titel der Sendung bzw. Aufzeichnung, dem Kennsignal für die Kategorie der Sendung bzw. Aufzeichnung und ggf. der Nummer der eingelegten Kassette in einem der Kassette zugehörigen und von der Nummer der Kassette abhängigen Speicherbereich des Archivspeichers 5 abgelegt.

Auf ähnliche Weise erfolgt die Aufzeichnung weiterer Programmbeiträge auf dieselbe Kassette und die Aufzeichnung von Programmbeiträgen auf die weiteren Kassetten des Kassettenmagazins.

Durch die beschriebenen Aufzeichnungsvorgänge sind im Archivspeicher 5 der Titel, der Anfangs- und Endbandstand, das Kategoriekennsignal und die Kassettennummer für jeden auf eine Kassette des Kassettenmagazins aufgezeichneten Programmbeitrag abgespeichert.

Will nun der Benutzer diejenigen Kassette herausfinden, auf der ein gewünschter Programmbeitrag aufgezeichnet ist, so teilt er dem Mikrocomputer 3 durch Eingabe des Kategoriekennsignals mittels des alphanumerischen Tastenblocks Z des Fernbedienungsgebers FB mit, welcher Kategorie der gewünschte Programmbeitrag angehört. Der Mikrocomputer 3 vergleicht sämtliche im Archivspeicher 5 abgespeicherten Kategoriekennsignale mit dem Kategoriekennsignal des gewünschten Programmbeitrages und initiiert die Anzeige der Titel, der Anfangs- und Endbandstände und der Kassettennummer sämtlicher Programmbeiträge, deren Kategorie mit der Kategorie des gewünschten Programmbeitrages übereinstimmt, auf dem Bildschirm BS des an den Videorecorder VR angeschlossenen Fernsehempfängers TV. Durch die Anzeige der Kassettennummer wird dem Benutzer damit die Möglichkeit eines schnellen Zugriffes auf die gewünschte Kassette geschaffen.

Eine vorteilhafte Weiterbildung der Erfindung besteht darin, daß der Mikrocomputer 3 dann, wenn ein gewünschter Programmbeitrag nicht vollständig aufgezeichnet wurde, beispielsweise bei kurzeitigem Netzausfall oder bei Nichtausreichen der Restspielzeit der Kassette, die Abspeicherung eines zweiten Kennsignals für die unvollständige Aufzeichnung initiiert. Ruft der Benutzer später das Inhaltsverzeichnis der betreffenden Kassette auf, so erhält er im Klartext die Information, daß der genannte Programmbeitrag nicht vollständig aufgezeichnet wurde.

Eine weitere vorteilhafte Weiterbildung der Erfindung besteht darin, daß der Mikrocomputer 3 dann, wenn ein gewünschter Programmbeitrag, beispielsweise aufgrund einer Programmänderung, nicht aufgezeichnet wurde, die Abspeicherung eines dritten Kennsignals für die unterbliebene Aufzeichnung initiiert. Ruft der Benutzer später das Inhaltsverzeichnis der betreffenden Kassette auf, so erhält er im Klartext die Information, daß der genannte Programmbeitrag nicht aufgezeichnet wurde.

Eine weitere vorteilhafte Weiterbildung der Erfindung besteht darin, daß der Mikrocomputer 3 nach Betätigung der Auswurftaste der Bedientastatur FB einen oder mehrere Aufzeichnungsköpfe des Videorecorders derart ansteuert, daß vor dem Kassettenauswurf der Inhalt des Archivspeichers 5 auf dem Magnetband der eingelegten Kassette aufgezeichnet wird. Dieße Aufzeichnung kann beispielsweise am Kassettenanfang oder am Ende einer Aufzeichnung in den Videoschrägspuren erfolgen. Der Vorteil einer derartigen Aufzeichnung besteht darin, daß der Inhalt des Archivspeichers 5 gesichert wird und folglich auch bei einem eventuellen Defekt des Speichers nicht verlorengeht.

Denkbar wäre auch die Abspeicherung des Inhaltes des Archivspeichers 5 auf einer eigens zu diesem Zweck vorgesehenen Zusatzkassette, deren Einlegen in den Videorecorder vom Mikrocomputer 3 durch Anzeige eines entsprechenden Befehls auf dem Bildschirm BS immer dann angefordert wird, wenn die Auswurftaste betätigt wurde und auf der zuletzt eingelegten Kassette ein neuer Programmbeitrag aufgezeichnet und damit der Inhalt des Archivspeichers 5 geändert wurde.

Eine weitere vorteilhafte Weiterbildung der Erfindung besteht darin, ein viertes Kennsignal für jeden aufzuzeichnenden Programmbeitrag zu verwenden und im Archivspeicher 5 abzuspeichern, beispielsweise die Jahreszahl der Aufzeichnung, die Quelle des programmbeitrages, der Name des Regisseurs eines Spielfilms, usw.. Soll nun die Kassettennummer eines bestimmten Programmbeitrages ermittelt werden, so können als Suchbegriffe das Kategoriekennsignal und daß Vierte Kennsignal verwendet Werden. Als Ergebnis dieses Suchvorgangs wird eine Tabelle angezeigt, die den Titel, den Anfangs- und Endbandstand und die Kassettennummer sämtlicher aufgezeichneter Programmbeiträge enthält, deren Kategorie mit der Kategorie des gewünschten Programmbeitrages und deren viertes Kennsignal mit dem Vierten Kennsignal des gewünschten Programmbeitrages übereinstimmt. Auf diese Weise kann die Anzahl der angezeigten Titel auch bei großen Kassettenmagazinen Wirkungsvoll reduziert und dadurch der Suchvorgang weiter vereinfacht werden.

Das beschriebene Archivsystem ist damit vergleichbar mit einer Datenbank, innerhalb derer durch Eingabe von Suchbegriffen ein bestimmter aufgezeichneter Programmbeitrag ermittelt werden kann.

Eine weitere vorteilhafte Weiterbildung der Erfindung besteht darin, das den Programmbeitrag beschreibende erste Kennsignal aus einer mit dem Fernsehsignal übertragenen Begleitinformation abzuleiten. Hierzu könnte beispielsweise in einem vom Sender ausgestrahlten VPS-Signal oder dem Fernsehtextsignal ein die Kategorie des Programmbeitrages beschreibendes Kennsignal enthalten sein. Dieses Kennsignal wird unter Verwendung eines VPS-Decoders oder des Fernsehtextdecoders des Videorecorders ausgewertet und als erstes Kennsignal abgespeichert.

Alternativ zu der oben beschriebenen Möglichkeit, den momentanen Bandstand mittels eines Initialisierungslaufes zu ermitteln, kann der momentane Bandstand auch dadurch erhalten werden, daß entweder in der CTL-Spur, einer eigenen Zeitcodespur oder in den Videoschrägspuren eine Zeitcodeinformation aufgezeichnet wird, welche bei jedem weiteren Einlegen der Kassette zur Verfügung steht und die gewünschte Information über den Bandstand liefert.

Eine weitere vorteilhafte Ausgestaltung der Erfindung besteht darin, aus dem auf dem Bildschirm BS angezeigten Inhaltsverzeichnis bzw. aus den auf dem Bildschirm BS angezeigten Titeln mittels des Tastenblocks C des Fernbedienungsgebers FB einen bestimmten Beitrag anzuwählen und dann die Übernahmetaste Ü zu betätigen. Der Mikrocomputer 3 löst daraufhin einen schnellen Umspulbetrieb zu der Bandstelle aus, die dem Anfang des ausgewählten Beitrages entspricht. Ist die gewünschte Bandstelle erreicht, so wird die erste Szene des ausgewählten Beitrages beispielsweise in Form eines Standbildes auf dem Bildschirm BS angezeigt, um dem Benutzer das Erreichen der gewünschten Bandstelle anzuzeigen. Beispielsweise kann das genannte Standbild unter Verwendung des nicht gezeichneten PIP (picture-in-picture)-Bausteines des Videorecorders als Kleinbild eingeblendet und die verbleibende Bildschirmfläche zur Anzeige von Titel, Kassettennummer, usw. verwendet werden.

## Patentansprüche

1. Videorecorder mit einer Einrichtung zur Abspeicherung des Inhaltsverzeichnisses eines aus einer Vielzahl von Magnetbandkassetten bestehenden Kassettenmagazins, mit
- einer Bedientastatur,
- einem Mikrocomputer, und
- einem Speicher zur Abspeicherung von Informationen über die örtliche Lage auf dem Magnetband und den Titel von Programmbeiträgen einer Vielzahl von numerierten Magnetbandkassetten,
**dadurch gekennzeichnet**, daß
- mittels der Bedientastatur (FB) jedem Programmbeitrag ein den Programmbeitrag beschreibendes erstes Kennsignal zugeordnet wird, das die Kategorie des Programmbeitrags beschreibt,
- das erste Kennsignal zusammen mit der Information über die örtliche Lage und dem Titel des Programmbeitrags im Speicher (5) abgelegt wird, und
- der Mikrocomputer (3) sämtliche im Speicher (5) abgelegten ersten Kennsignale auf übereinstimmung mit einem mittels der Bedientastatur (FB) eingegebenen, einem aufzufindenden Programmbeitrag entsprechenden ersten Kennsignal überprüft und die Anzeige des Titels jedes Programmbeitrages und der Nummer der jeweils zugehörigen Magnetbandkaßsette initiiert, dessen erstes Kennsignal mit dem ersten Kennsignal des aufzufindenden programmbeitrages übereinstimmt.

2. Videorecorder nach Anspruch 1, **dadurch gekennzeichnet**, daß der Mikrocomputer (3) dann, wenn ein gewünschter Programmbeitrag nicht vollständig aufgezeichnet wurde, die Abspeicherung eines zweiten Kennsignals für die unvollständige Aufzeichnung im Speicher (5) initiiert.

3. Videorecorder nach einem oder mehreren der vorhergehenden Ansprüche, **dadurch gekennzeichnet**, daß der Mikrocomputer (3) dann, Wenn der gewünschte programmbeitrag aufgrund einer Programmänderung nicht aufgezeichnet wurde, die Abspeicherung eines dritten Kennsignals für die unterbliebene Aufzeichnung im Speicher (5) initiiert.

4. Videorecorder nach einem oder mehreren der vorhergehenden Ansprüche, **dadurch gekennzeichnet**, daß der Mikrocomputer (3) nach Betätigung der Auswurftaste der Bedientastatur (FB) vor dem Kassettenauswurf einen oder mehrere Magnetköpfe des Videorecorders derart ansteuert, daß der Inhalt des Speichers (5) auf dem Magnetband der eingelegten Kassette aufgezeichnet wird.

5. Videorecorder nach einem oder mehreren der vorhergehenden Ansprüche, **dadurch gekennzeichnet**, daß
- mittels der Bedientastatur (FB) jedem Programmbeitrag ein viertes, den Programmbeitrag zusätzlich beschreibendes Kennsignal zugeordnet wird,
- das vierte Kennsignal zusammen mit der Information über die örtliche Lage, den Titel und einem oder mehreren der ersten bis dritten Kennsignale im Speicher (5) abgelegt wird, und
- der Mikrocomputer (3) sämtliche im Speicher (5) abgelegten vierten Kennsignale auf Übereinstimmung mit einem mittels der Bedientastatur (FB) eingegebenen, einem aufzufindenden Programmbeitrag entsprechenden vierten Kennsignal überprüft und die Anzeige des Titels und der Nummer der Magnetbandkassette jedes Programmbeitrages initiiert, dessen erstes und viertes Kennsignal mit dem ersten und vierten Kennsignal des aufzufindenden Programmbeitrages übereinstimmt.

6. Videorecorder nach einem oder mehreren der vorhergehenden Ansprüche, **dadurch gekennzeichnet**, daß die Information über den Titel des Programmbeitrages mittels eines Fernsehtextdecoders (8) aus einem Fernsehtextsignal abgeleitet wird.

7. Videorecorder nach einem oder mehreren der vorhergehenden Ansprüche, **dadurch gekennzeichnet**, daß das erste Kennsignal aus einer mit dem Fernsehsignal übertragenen Begleitinformation abgeleitet wird.

8. Videorecorder nach einem oder mehreren der vorhergehenden Ansprüche, **dadurch gekennzeichnet**, daß das vierte Kennsignal aus einer mit dem Fernsehsignal übertragenen Begleitinformation abgeleitet wird.

9. Videorecorder nach einem oder mehreren der vorhergehenden Ansprüche, **dadurch gekennzeichnet**, daß aus der auf dem Bildschirm (BS) dargestellten übersicht mittels des Fernbedienungsgebers (FB) ein gewünschter Programmbeitrag ausgewählt wird, der Mikrocomputer (3) einen schnellen Umspulbetrieb zu einer dem Anfang des ausgewählten Programmbeitrages entsprechenden Bandstelle steuert und beim Erreichen dieser Bandstelle die Anzeige eines der ersten Szene des ausgewählten Programmbeitrages entspechenden Standbildes auf dem Bildschirm (BS) initiiert.

## Claims

1. Video recorder comprising a device for storing the list of contents of a cassette magazine consisting of a multiplicity of magnetic tape cassettes, comprising
- an operating keyboard,
- a microcomputer, and
- a memory for storing information on the local position on the magnetic tape and the title of programme contributions of a multiplicity of numbered magnetic tape cassettes;
characterized in that
- a first identification signal describing the programme contribution and which describes the category of the programme contribution is allocated to each programme contribution by means of the operating keyboard (FB),
- the first identification signal, together with the information on the local position and the title of the programme contribution, is stored in the memory (5), and
- the microcomputer (3) checks all first identification signals stored in the memory (5) for correspondence with a first identification signal input by means of the operating keyboard (FB) and corresponding to a programme contribution to be found and initiates the display of the title of each programme contribution and of the number of the in each case associated magnetic tape cassette, the first identification signal of which corresponds to the first identification signal of the programme contribution to be found.

2. Video recorder according to Claim 1, characterized in that, when a desired programme contribution has not been completely recorded, the microcomputer (3) initiates the storing of a second identification signal for the incomplete recording in the memory (5).

3. Video recorder according to one or more of the preceding claims, characterized in that, when the desired programme contribution has not been recorded due to a programme change, the microcomputer (3) initiates the storing of a third identification signal for the omitted recording in the memory (5).

4. Video recorder according to one or more of the preceding claims, characterized in that, after the ejection key of the operating keyboard (FB) has been operated, the microcomputer (3) activates one or more magnetic heads of the video recorder before the cassette ejection in such a manner that the content of the memory (5) is recorded on the magnetic tape of the inserted cassette.

5. Video recorder according to one or more of the preceding claims, characterized in that
- a fourth identification signal additionally describing the programme contribution is allocated to each programme contribution by means of the operating keyboard (FB),
- the fourth identification signal, together with the information on the local position, the title and one or more of the first to third identification signals, is stored in the memory (5), and
- the microcomputer (3) checks all fourth identification signals stored in the memory (5) for correspondence with a fourth identification signal input by means of the operating keyboard (FB) and corresponding to a programme contribution to be found and initiates the display of the title and of the number of the magnetic tape cassette of each programme contribution, the first and fourth identification signal of which corresponds to the first and fourth identification signal of the programme contribution to be found.

6. Video recorder according to one or more of the preceding claims, characterized in that the information on the title of the programme contribution is derived from a teletext signal by means of a teletext decoder (8).

7. Video recorder according to one or more of the preceding claims, characterized in that the first identification signal is derived from accompanying information transmitted together with the television signal.

8. Video recorder according to one or more of the preceding claims, characterized in that the fourth identification signal is derived from accompanying information transmitted together with the television signal.

9. Video recorder according to one or more of the preceding claims, characterized in that, from the overview displayed on the screen (BS), a desired programme contribution is selected by means of the remote control transmitter (FB), the microcomputer (3) controls fast rewinding operation to a tape location corresponding to the start of the selected programme contribution and, when this tape position is reached, initiates the display of a freeze frame corresponding to the first scene of the selected programme contribution on the screen (BS).

## Revendications

1. Magnétoscope comportant un dispositif pour mémoriser la table des matières d'un magasin à cassettes constitué par une multiplicité de cassettes à bande magnétique, comportant
- un clavier de commande,
- un micro-ordinateur, et
- une mémoire pour mémoriser des informations concernant la position locale sur la bande magnétique et le titre de parties du programme d'une multiplicité de cassettes à bande magnétique numérotées,
caractérisé en ce qu'au moyen du clavier de commande (FB), à chaque partie du programme on associe un premier signal caractéristique, qui décrit la partie du programme et décrit la catégorie de la partie du programme,
- le premier signal caractéristique ainsi que l'information concernant la position locale et le titre de la partie du programme sont mémorisés dans la mémoire (5), et
- le micro-ordinateur (3) contrôle tous les premiers signaux caractéristiques mémorisés dans la mémoire (5) pour voir s'ils coïncident avec un premier signal caractéristique qui est introduit au moyen du clavier de commande (FB) et correspond à une partie de programme devant être trouvée et qui déclenche l'affichage du titre de chaque partie du programme et le numéro de la cassette à bande magnétique respectivement associée et dont le premier signal caractéristique coïncide avec le premier signal caractéristique de la partie de programme devant être trouvée.

2. Magnétoscope selon la revendication 1, caractérisé en ce que, lorsqu'une partie désirée du programme n'a pas été enregistrée complètement, le microordinateur (3) déclenche la mémorisation d'un second signal caractéristique pour l'enregistrement complet dans la mémoire (5).

3. Magnétoscope selon une ou plusieurs des revendications précédentes, caractérisé en ce que la partie désirée du programme n'a pas été enregistrée en raison d'une modification du programme, le micro-ordinateur (3) déclenche la mémorisation d'un troisième signal caractéristique pour l'enregistrement restant à exécuter dans la mémoire (5).

4. Magnétoscope selon une ou plusieurs des revendications précédentes, caractérisé en ce qu'après l'actionnement de la touche d'éjection du clavier de commande (FB), le micro-ordinateur (3) commande, avant l'éjection de la cassette, une ou plusieurs têtes magnétiques du magnétoscope de sorte que le contenu de la mémoire (5) est enregistré sur la bande magnétique de la cassette insérée.

5. Magnétoscope selon une ou plusieurs des revendications précédentes, caractérisé en ce que
- au moyen du clavier de commande (FB), à chaque partie du programme on associe un quatrième signal caractéristique qui décrit en supplément la partie du programme,
- le quatrième signal caractéristique ainsi que l'information concernant la position locale, le titre et un ou plusieurs des premier, second et troisième signaux caractéristiques sont mémorisés dans la mémoire (5), et
- le micro-ordinateur (3) vérifie tous les quatrième signaux caractéristiques mémorisés dans la mémoire (5), pour voir s'ils coïncident avec un quatrième signal caractéristique introduit au moyen du clavier de commande (FB) et correspondant à une partie de programme devant être trouvée, et déclenche l'affichage du titre et du numéro de la cassette à bande magnétique de chaque partie du programme, dont les premier et quatrième signaux caractéristiques coïncident avec les premier et quatrième signaux caractéristiques de la partie de programme devant être trouvée.

6. Magnétoscope selon une ou plusieurs des revendications précédentes, caractérisé en ce que l'information concernant le titre de la partie du programme est obtenue au moyen d'un décodeur de texte de télévision (8) à partir d'un signal de texte de télévision.

7. Magnétoscope selon une ou plusieurs des revendications précédentes, caractérisé en ce que le premier signal caractéristique est tiré d'une information accompagnatrice transmise avec le signal de télévision.

8. Magnétoscope selon une ou plusieurs des revendications précédentes, caractérisé en ce que le quatrième signal caractéristique est dérivé d'une information accompagnatrice transmise avec le signal de télévision.

9. Magnétoscope selon une ou plusieurs des revendications précédentes, caractérisé en ce qu'une partie désirée du programme est sélectionnée à partir de la vue d'ensemble, représentée sur l'écran (BS), au moyen du générateur de télécommande (FB), que le micro-ordinateur (3) commande un fonctionnement de rembobinage rapide jusqu'à un point de la bande qui correspond au début de la partie sélectionnée du programme, et que lorsque ce point de la bande est atteint, l'affichage d'une image fixe, qui correspond à la première scène de la partie sélectionnée du programme, sur l'écran (BS) est déclenché.
